# EUROPÄISCHE PATENTSCHRIFT

(11) **EP 0 439 783 B1**
(45) Veröffentlichungstag und Bekanntmachung des Hinweises auf die Patenterteilung: **16.03.1994**
(21) Anmeldenummer: 90124660.3
(22) Anmeldetag: 19.12.1990
(51) Int. Cl.: B01F 1/00, C08J 3/11

(54) **Verfahren zum Lösen von Elastomeren in einem geschlossenen System**
Process for dissolving elastomers in a closed system
Procédé pour mettre en solution des élastomères dans un système fermé

(30) Priorität: 23.01.1990 DE 4001774
(43) Veröffentlichungstag der Anmeldung: 07.08.1991
(73) Patentinhaber: Continental Aktiengesellschaft, 30165 Hannover (DE)
(72) Erfinder: Eymer, Heiko, W-3410 Northeim (DE); Kopleck, Wilhelm, W-3410 Northeim 1 (DE)

(56) Entgegenhaltungen:
- GB-A- 2 071 113
- US-A- 2 427 513
- US-A- 3 725 314
- US-A- 3 891 593
- US-A- 4 316 672
- W.HOFMANN "Kautschuk-Technologie" 1980, GENTNER VERLAG, Stuttgart, Seiten 457-461

## Beschreibung

Die Erfindung betrifft zunächst ein Verfahren zum Lösen von Kautschuk, einer Kautschukmischung oder ähnlichen Elastomeren, in einem organischen Lösemittel.

Derartige Lösungen dienen als Fertigprodukte beispielsweise als Kleber mit unterschiedlichen Eigenschaften und für unterschiedliche Verwendungszwecke. Sie können aber auch als Vorprodukte, beispielsweise zum Beschichten von Geweben für die Schlauchboot- und Rettungsinselherstellung oder für extrem dünne, saubere und gleichmäßige Membranen, beispielsweise für den Kraftfahrzeugbau, hier insbesondere für Einspritzpumpen, verwendet werden. Derartige Lösungen sind für diesen Zweck durch ihre außerordentlich maßgenaue Verarbeitung sehr gut einsetzbar.

Hergestellt werden derartige Elastomerlösungen, beispielsweise aus einer Mischung, die in Methylethylketon (MEK), Benzin, Toluol, Toluol-Essigesther, Trichlorethan, Xylol oder ähnlichen Lösemitteln dispergiert bzw. suspendiert wird. Dazu wird das zu lösende Elastomer in einen Knetbottich gegeben und das Lösemittel mittels eines elektromotorisch getriebenen Knetwerk verknetet, bis die gewünschte Konsistenz erreicht ist. Die bei diesem Knetvorgang auftretenden Scherkräfte sind recht hoch, so daß die aufzubringende Knetleistung bis 30 KW beträgt.

Diese Eingangsleistung wird während des Knetens in Wärme umgesetzt, wodurch sich die Lösung erwärmt. Verbunden sind damit zwei Nachteile, zum einen beginnt - je nach geforderter Mischung - die Vernetzung des zu lösenden Elastomers bereits bei etwa 80-90 °C, zum anderen ist das Lösemittel bereits bei 60-80 °C relativ flüchtig. Diese Temperaturen aber sind bei dem bisherigen Knet- und Lösevorgang nicht auszuschließen. Hinzu kommt, daß die Lösung unter optischer Begutachtung des Maschinenpersonals zu erfolgen hat, damit je nach erreichter Konsistenz ggf. verdunstetes Lösemittel nachgesetzt werden kann.

Bei Raumtemperatur sind die verwendete Lösemittel zwar schwerer als Luft, im erwärmten Zustand jedoch sind sie leichter und können aufsteigen. Dadurch können die MAK-Werte sehr schnell erreicht und überschritten werden. Eine beispielsweise mit einem Schauglas versehene Abdeckung des Knetbottichs ist nicht oder nur sehr schlecht möglich, da derartige Schaugläser innerhalb kürzester Zeit beschlagen und verschmieren.

Aufgabe der vorliegenden Erfindung ist es, ein Verfahren der eingangs beschriebenen Art zu schaffen, mit dem die geforderten MAK-Werte unterschritten und der Lösemittelverbrauch auf ein Minimum reduziert werden kann.

Gelöst wird diese Aufgabe dadurch, daß das Lösen mit einem an sich bekannten Schüttelverfahren erfolgt, wobei der zu lösende Kautschuk, die Kautschukmischung oder das Elastomer und das Lösemittel in einem vorbestimmbaren Verhältnis in einen verschließbaren Mischebehälter gegeben werden und der Mischbehälter nach dem Verschließen in Mischbewegungen versetzt wird, bis eine Lösung gleichmäßiger Konsistenz erreicht ist.

Durch diese Maßnahmen wird ein Verfahren geschaffen, mit dem der Lösemittel-Austritt über die gesamte Lösezeit vermieden wird. Die vorgeschriebenen MAK-Werte werden dadurch nicht erreicht. Auch ist der Verbrauch an Lösemittel wesentlich geringer als bisher, da nahezu keine Verdunstung auftritt. Die erforderliche Antriebsleistung ist wesentlich geringer und beträgt bei gleicher Mischbehältergröße nur noch ca. 1,5 KW. Auch ist der gesamte Lösungsprozeß wesentlich schonender und die so gewonnene Lösung wesentlich länger haltbar.

Bei einer Vorrichtung zur Durchführung des erfindungsgemäßen Verfahrens ist es vorgesehen, daß der das zu lösende Elastomer und das Lösemittel aufnehmende Mischbehälter mit einem Deckel dicht verschließbar und mit einem Antriebsmotor in mehrdimensionale, vorzugsweise dreidimensionale Mischbewegungen versetzbar ist, sowie, daß der Mischbehälter eine glatte, gerade und strömungsbrecherfreie Innenwandung aufweist. Durch diese Maßnahmen kann der Behälter innerhalb kürzester Zeit selbständig gereinigt werden, wodurch kurze Wechselzeiten eingehalten werden können. Das bisher bestehende Problem, daß das Bedienungspersonal im Bereich der MAK-Werte Bottiche und Rührwerke reinigen mußte, entfällt; bisher notwendige Atemschutzgeräte werden dadurch überflüssig.

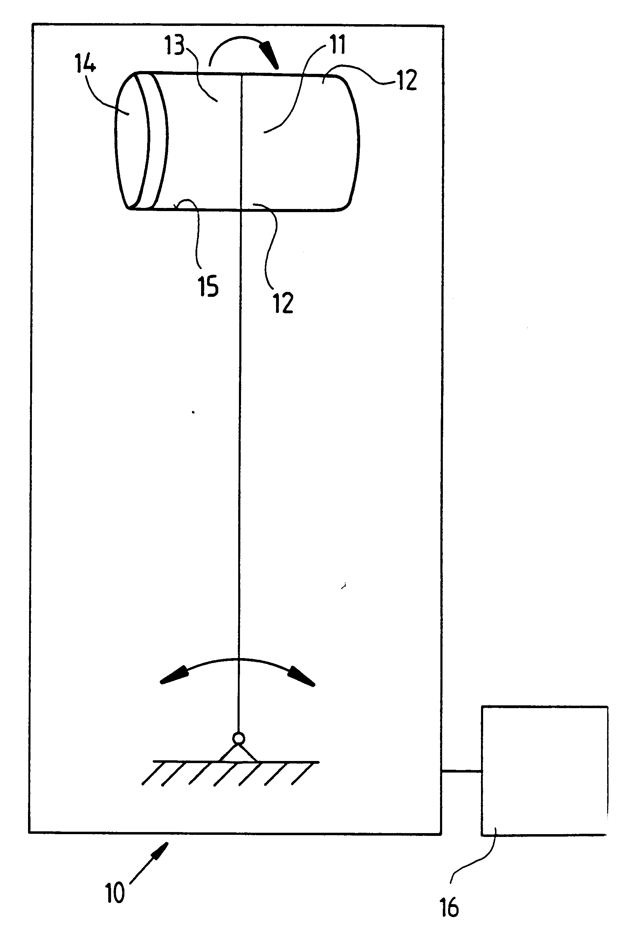

Weitere für das erfindungsgemäße Verfahren vorteilhafte Maßnahmen sind in den abhängigen Ansprüchen beschrieben. Die Vorrichtung ist in der beiliegenden Zeichnung dargestellt und wird nachfolgend näher beschrieben. Der in der einzigen Figur dargestellte Mischer 10 besteht eben im wesentlichen aus einem Mischbehälter 13, dessen Innenwandung 15 glatt, gerade und ohne jegliche Strömungsbrecher ausgebildet ist. In diesen Mischbehälter 13 ist das zu lösende Elastomer 11 gefüllt und wird mit dem Lösemittel 12 vermischt. Um zu vermeiden, daß das Lösemittel 12 flüchtig wird, ist der Mischbehälter 13 mit einem Deckel 14 hermetisch verschließbar.

Angetrieben wird der Mischer 10 durch einen Antriebsmotor 16, der eine relativ geringe Leistungsaufnahme von ca. ein bis zwei, vorzugsweise 1, 5 KW aufweist.

Die Mischdauer kann je nach erforderlicher Konsistenz, Lösemittel oder Rohstoff vorbestimmt werden. Durch die geringe Leistungsaufnahme wird das Elastomer, beispielsweise eine Kautschukmischung, nicht wesentlich über Raumtemperatur erwärmt. Die organischen Lösemittel werden nicht flüchtig und die auftretenden Konzentrationen im Raum liegen unterhalb der vorgeschriebenen MAK-Werte.

## Patentansprüche

1. Verfahren zum Lösen von Kautschuk, einer Kautschukmischung, oder ähnlichen Elastomeren in einem organischen Lösemittel,
**dadurch gekennzeichnet,**
daß das Lösen mit einem Schüttelverfahren erfolgt, wobei der zu lösende Kautschuk, die Kautschukmischung oder das Elastomer und das Lösemittel in einem vorbestimmbaren Verhältnis in einen verschließbaren Mischbehälter gegeben werden und der Mischbehälter nach dem Verschließen in Mischbewegungen versetzt wird, bis eine Lösung gleichmäßiger Konsistenz erreicht ist.

2. Verfahren nach Anspruch 1, dadurch gekennzeichnet, daß der gefüllte und verschlossene Mischbehälter mehrdimensional, vorzugsweise dreidimensional bewegt wird.

3. Verfahren nach den Ansprüchen 1 und 2, dadurch gekennzeichnet, daß die Lösung des Kautschuks, der Kautschukmischung oder des Elastomers bei Temperaturen unterhalb der Vernetzungstemperatur hergestellt wird.

4. Verfahren nach den Ansprüchen 1 bis 3, dadurch gekennzeichnet, daß zum Reinigen des Mischbehälters Lösemittel eingefüllt und der Mischbehälter erneut geschüttelt wird.

5. Verfahren nach Anspruch 1, wobei der das zu lösende Elastomer (11) und das Lösemittel (12) aufnehmende Mischbehälter (13) mit einem Deckel (14) dicht verschließbar und mit einem Antriebsmotor (16) in dreidimensionale Mischbewegungen versetzbar ist.

6. Verfahren nach Anspruch 5, wobei der Mischbehälter (13) eine glatte, gerade und strömungsbrecherfreie Innenwandung (15) aufweist.

7. Verfahren nach den Ansprüchen 5 und 6, wobei die Schüttelzeit des Mischbehälters (13) variierbar ist.

8. Verfahren nach den Ansprüchen 5 bis 7, wobei die Schüttelgeschwindigkeit des Mischbehälters (13) variierbar ist.

## Claims

1. Method of dissolving rubber, a rubber mixture or similar elastomers in an organic solvent, characterised in that the dissolving process is effected by a shaking method, wherein the rubber to be dissolved, the rubber mixture or the elastomer and the solvent are introduced into a sealable mixing vessel in a predeterminable ratio, and the mixing vessel is set to effect mixing movements after the sealing process until a solution of uniform consistency is achieved.

2. Method according to claim 1, characterised in that the full and sealed mixing vessel is moved in a multi-dimensional manner, preferably in a three-dimensional manner.

3. Method according to claims 1 and 2, characterised in that the solution of the rubber, the rubber mixture or the elastomer is produced at temperatures below the cross-linking temperature.

4. Method according to claims 1 to 3, characterised in that solvents are introduced to clean the mixing vessel, and the mixing vessel is shaken afresh.

5. Method according to claim 1, wherein the mixing vessel (13), which receives the elastomer (11) to be dissolved and the solvent (12), is tightly sealable by means of a cover (14) and can be set to effect three-dimensional mixing movements by means of a drive motor (16).

6. Method according to claim 5, wherein the mixing vessel (13) has a smooth, straight internal wall (15), which is free of flow interrupters.

7. Method according to claims 5 and 6, wherein the shaking time for the mixing vessel (13) is variable.

8. Method according to claims 5 to 7, wherein the shaking speed for the mixing vessel (13) is variable.

## Revendications

1. Procédé pour dissoudre un caoutchouc, un mélange de caoutchouc ou un élastomère analogue dans un solvant organique, caractérisé en ce que l'on procède à la dissolution par une technique d'agitation dans laquelle le caoutchouc, le mélange de caoutchouc ou l'élastomère à dissoudre est introduit avec le solvant, dans des proportions relatives déterminées, dans un récipient de mélange qui peut être fermé, et qui après fermeture, est mis dans des mouvements provoquant le mélange jusqu'à ce qu'on atteigne une solution à consistance uniforme.

2. Procédé selon la revendication **1**, caractérisé en ce que le récipient de mélange rempli et fermé est mis en mouvement dans plusieurs dimensions, de préférence dans trois dimensions.

3. Procédé selon les revendications **1** et **2,** caractérisé en ce que la solution du caoutchouc, du mélange de caoutchouc ou de l'élastomère est préparée à des températures inférieures à la température de réticulation.

4. Procédé selon les revendications **1** à **3,** caractérisé en ce que, pour nettoyer le récipient de mélange, on y introduit du solvant et on agite à nouveau le récipient de mélange.

5. Procédé selon la revendication **1,** dans lequel le récipient de mélange (13) recueillant l'élastomère (11) à dissoudre et le solvant (12) peut être fermé hermétiquement par un couvercle (14) et mis en mouvement de mélange à trois dimensions par un moteur (16).

6. Procédé selon la revendication **5,** caractérisé en ce que le récipient de mélange (13) a une paroi intérieure lisse, droite et exempte d'obstacles à l'écoulement.

7. Procédé selon les revendications **5** et **6,** dans lequel la durée d'agitation du récipient de mélange (13) peut varier.

8. Procédé selon les revendications **5** à **7,** dans lequel la vitesse d'agitation du récipient de mélange (13) peut varier.
